# EUROPÄISCHE PATENTSCHRIFT

(11) **EP 1 180 450 B1**
(45) Veröffentlichungstag und Bekanntmachung des Hinweises auf die Patenterteilung: **27.03.2002**
(21) Anmeldenummer: 00117090.1
(22) Anmeldetag: 09.08.2000
(51) Int. Cl.: B60P 1/44

(54) **Hubladebühne mit Anschlussflansch**
Loading tailgate with connecting flange
Hayon élévateur avec bride de raccordement

(43) Veröffentlichungstag der Anmeldung: 20.02.2002
(73) Patentinhaber: Bär, Gerd, 74078 Heilbronn (DE)
(72) Erfinder: Bär, Gerd, 74078 Heilbronn (DE)
(74) Vertreter: KOHLER SCHMID + PARTNER

(56) Entgegenhaltungen:
- EP-A- 0 878 350
- DE-A- 2 717 351
- DE-A- 3 345 589
- DE-A- 3 835 141
- US-A- 3 065 868

## Beschreibung

### Stand der Technik

Seit mindestens 1993 sind falt- und unterfahrbare Hubladebühnen mit parallelogrammförmigem Hubwerk und einer Plattform bekannt, die aus einem hubwerkseitigen Element (Anschlusskopf), welches Bestandteil der Parallelogrammführung ist, und einem oder zwei Faltteile besteht, die mit dem Anschlusskopf scharnierförmig verbunden sind.

Derartige Hubladebühnen werden häufig bei Fahrzeugen eingesetzt, die Wechselaufbauten haben. Solche Wechselaufbauten sind zwar von der Aufnahme her in der DIN EN 284 genormt. Nicht genormt ist die Hecksituation, insbesondere die Ausführung des Heckschwellers, denn dieser muss je nach Art des Wechselaufbaus, z. B. offene Brücke oder Tiefkühlaufbau mit Türen entsprechend diesen Anfordemissen gestaltet sein. Daher kann ein Trägerfahrzeug, das eine solche Hubladebühne hat, unterschiedlichste Aufbauten befördern.

Für eine einwandfreie Überfahrmöglichkeit mit Gabel- oder Rollwagen von der Ladefläche des Aufbaus auf die Plattform der Hubladebühne, dürfen naturgemäß keine großen Spalte oder Abstände vorhanden sein. Bei internen Werkfuhrparks, die mit einem geschlossenen oder abgegrenzten Aufbautenpool arbeiten, versucht man aus Kostengründen, den Heckschweller glatt zu gestalten, damit die Plattform der Hubladebühne ohne weitere Zusatzeinrichtungen an diesem Heckschweller bündig andocken kann.

Wenn dieser Idealzustand nicht erreichbar ist, weil z. B. schon eine Menge fabrikatstandardisierter Aufbauten vorhanden sind, die außen liegende Drehstangenverschlüsse haben, wird auch noch der Kompromiss akzeptiert, am vordersten Teil des Plattformanschlusskopfes mehr oder minder große Ausschnitte anzubringen, damit die Plattform beim Anfahren auf Ladebodenebene nicht an den Verschlusslagem der Drehstangenverschlüsse hängen bleibt.

Eine weitere Einsatzanforderung besteht bei einer Spedition, die z. B. alle auf dem gesamten Markt befindlichen straßen- und schienentauglichen Wechselaufbauten transportieren muss. Derartige Wechselaufbauten besitzen im Heckschwellerbereich großvolumige Rammgummis.

Um solche Wechselaufbauten mit Hubladebühnen be- und entladen zu können, wurde von der Gerd Bär GmbH eine Überfahrbrücke eingeführt, die es erlaubt, den notwendigen Abstand zwischen Anschlusskopf und Ladeboden solcher Wechselaufbauten sicher zu überbrücken.

### Technisches Problem

Haben Heckschweller aufbauende Verschlusslager von außen liegenden Drehstangenverschlüssen der Türen, kollidiert der vorderste Teil des aus Stahl gefertigten Anschlusskopfes mit diesen Lagern. Bei fester Zuordnung des Aufbaus zur Hubladebühne oder einer beschränkten, definierten Anzahl Wechselaufbauten mit gleichem Heckschweller, musste seither der Monteur mit dem Schneidbrenner die Oberdecke des Anschlusskopfes im Kollisionsbereich ausbrennen. Dieses Verfahren erfordert ein aufwendiges Versäubem der Brennlinien und einen nachträglichen Korrosionsschutz am sonst fertig lackierten Anschlusskopf. Dieses Verfahren ist teuer und sieht unprofessionell aus.

Bei undefinierter Heckschwellersituation kann die Plattform und damit der Anschlusskopf nicht nahe genug an den Heckschweller heranfahren. Es bleibt ein für Roll- und Gabelhubwagen unüberbrückbarer Spalt. Dieser wurde mit einer horizontal um 180° schwenkbaren Überfahrbrücke gelöst. Um verstaubar zu sein, muss diese Überfahrbrücke gelenkig auf dem Festteil der Plattform drehbar gelagert sein. Von diesem Anbringungsort heraus muss es zunächst den gesamten Anschlusskopf überbrücken und darüber hinaus den Abstand bis zum Ladeboden. Dadurch ist die Überfahrbrücke lang und schwer, dadurch sind auch entsprechend kräftige Federelemente erforderlich. Im verstauten Zustand liegt die Überfahrbrücke zwischen Falt- und Festteil und vergrößert dadurch die Plattformpaketdicke, was Bodenfreiheit und Böschungswinkel am Fahrzeugheck kostet. Weiter verkleinert die Überfahrbrücke die Nutzfläche der Plattform um bis zu 15 %. Beim Überfahren mit Roll- oder Hubwagen müssen zwei Höhenübergänge überwunden werden (je Steigung und Gefälle).

Beim Absenken der Plattform ist durch unterschiedliche Überdeckung von Überfahrbrücke und Ladeboden häufig nicht sichergestellt, dass sich die Überfahrbrücke durch ihre Federentlastung automatisch senkrecht stellt, wodurch der Bedienende mit der Fußspitze nachhelfen muss. Aufgrund der Größe der Überfahrbrücke ist die Beschädigungsgefahr hoch, ebenso werden oft die Federn beschädigt, da sich diese auf der Plattform befinden.

Bei nicht sorgfältiger Bedienung der schweren Überfahrbrücke durch die Bedienperson entstehen durch das Aufschlagen der schweren Überfahrbrücke auf dem Ladeboden erhebliche Geräusche, die an vielen Abladestellen unerwünscht oder gar verboten sind.

Möchte ein Kunde aufgrund von Fehldisposition oder Nutzungsänderung durch andere Aufbauten die Überfahrbrücke nachträglich anbauen, erfordert dies handwerkliches Geschick durch nachträgliches Anbringen der Befestigungsbohrungen. Oft sind mit dieser Tätigkeit wenig qualifizierte Personen befasst. Wird hierbei unsauber gearbeitet, läuft die Überfahrbrücke schlecht, welches den Verschleiß fördert.

### Lösung

Die Erfindung schlägt gemäß den Patentansprüchen vor, den Anschlusskopf so zu gestalten, dass er entsprechend dem Verwendungszweck wahlweise ohne oder mit einer festen oder einer beweglichen Überfahrbrücke verwendet werden kann. Der so ausgebildete Anschlusskopf mit vertikalem Anschlussflansch erlaubt die wahlweise Befestigung der Anschlags- und Überbrückungselemente.

Im einfachsten Fall werden mindestens zwei Gummianschlagleisten angeschraubt, die beim Anfahren an den glatten Heckschweller geräuschvermeidend wirken.

Bei einem Heckschweller mit definierten Verschlusslagern von außen liegenden Drehstangenverschlüssen der Türen wird am Anschlusskopf statt der Gummileisten eine feste U-förmige Überfahrbrücke, z. B. als Aluminiumstrangpressprofil angeschraubt. Diese U-Profil kann im Bereich der Verschlusslager je nach Tiefe derselben entweder ausgeschnitten oder komplett abgetrennt werden. Hierdurch entstehen die notwendigen Aussparungen für die aufbauende Verschlusslager. Die Aussparung kann auf einfache Weise mittels Bohren und Sägen erfolgen.

Der Einsatz von Heckschwellem mit undefinierten Aufbauelementen, wie z. B. großen Rammgummis, an denen der LKW aufbauseitig an der Rampe andockt, macht den Einsatz einer beweglichen Überfahrbrücke notwendig. Diese besteht erfindungsgemäß aus anschraubbaren Flanschlagern, die mit dem Flansch des Anschlusskopfes verschraubt werden, und einem beweglichen Klappteil, verbunden mit einer Welle und positioniert mittels Federn. Durch die Anbringung an der äußersten vorderen Kante des Anschlusskopfes ist die erforderliche Tiefe der Klappbrücke auf das minimal erforderliche Maß beschränkt, welches sich durch die Überbrückung des Abstandes, plus die Überdeckung am Ladeboden und abzüglich des Abstandes Drehpunkt Flansch zusammensetzt.

Diese kurze Klappbrücke lässt sich in der Fahrstellung fast senkrecht im vorhandenen Raum zwischen Anschlusskopf, eingefaltetem Plattformpaket und der Tragarmkontur problemlos verstauen. In der Arbeitsbereitschaftsstellung steht das Klappteil in etwa senkrecht nach oben und wird in dieser Position durch ein Federelement gehalten.

### Erreichte Vorteile

Der Kunde kann die für ihn optimale Lösung wählen, und zwar sowohl vor dem Kauf als auch nach dem Kauf. Bei Nutzungsänderung durch Verwendung anderer Aufbauten kann er leicht und ohne große Fachkenntnisse die feste oder bewegliche Überfahrbrücke anschrauben. Bei der Herstellung der Hubladebühne als Bausatz bleibt der Flansch des Anschlusskopfes ohne Zubehör. Nach Bestellung des Kunden werden die gewünschten Ausführungen im Montagematerial beigepackt. Dies gestattet eine rationelle Produktion und Logistik.

Benötigt der Kunde bei der Neumontage die feste Überfahrbrücke, kann der Monteur diese leicht, schnell und sauber in bestehende Erfordernisse anpassen.

Der komplette Korrosionsschutz der Stahlteile der Hubladebühne wird nicht verletzt, so dass die Montage ohne jegliche Nachlackierung erfolgen kann.

Der erfindungsgemäße Anschlusskopf mit beweglicher Überfahrbrücke verringert die Nutzfläche der Plattform nicht.

Die Bedienperson muss mit Roll- oder Hubwagen nur einen Höhenunterschied überwinden.

Durch die geringe Tiefe des Klappteiles ist dieses leichter dimensioniert, mit der Konsequenz, dass es nur ca. 20 % gegenüber dem Stand der Technik bei gleichem Werkstoff wiegt. Dies ermöglicht entsprechend kleine Federelemente, lässt sich leicht bedienen, ist viel weniger beschädigungsanfällig und kann auch bei geringer Sorgfalt lärmarm bedient werden.

Die Klappbrücke wird beim Absenken der Plattform immer sicher aufgestellt. Selbst bei Fehlbedienung durch Umklappen in Bodennähe verursacht die Kollision mit dem hubwerkseitigen Anschlag keinen Crash, da die federbelastete Klappbrücke ausweicht.

### Beschreibung der Figuren

Weitere Vorteile der Erfindung ergeben sich aus der Beschreibung und der Zeichnung. Es zeigt:
- Figur 1: in einer gesamthaften Seitenansicht ein erstes Ausführungsbeispiel der erfindungsgemäßen Hubladebühne mit einer Anschlagleiste an einem Anschlusskopf des Hubwerks;
- Figur 2: in vergrößerter Detailansicht die Hubladebühne der Figur 1 bei auf Ladebodenniveau angehobener Plattform im Bereich des Anschlusskopfes;
- Figur 3: ein zweites Ausführungsbeispiel der erfindungsgemäßen Hubladebühne mit einem U-Profil als starre Überfahrbrücke in einer Darstellung analog Figur 2;
- Figur 4: eine Draufsicht auf die Überfahrbrücke gemäß X in Figur 3;
- Figur 5: ein drittes Ausführungsbeispiel der erfindungsgemäßen Hubladebühne mit einem schwenkbaren Klappteil als bewegliche Überfahrbrücke in einer Darstellung analog Figur 2, wobei die Plattform zu einem Plattformpaket zusammengefaltet und in ihre Verstauposition angehoben ist;
- Figur 6: die Hubladebühne der Figur 5 mit auf Ladebodenniveau angehobener Plattform, wobei das Klappteil auf dem Ladeboden aufliegt;
- Figur 7: die Hubladebühne der Figur 5 mit vom Ladebodenniveau abgesenkter Plattform, wobei das Klappteil beim Absenken an einem hubwerk-seitigen Anschlag aufgerichtet wird; und
- Figur 8: die Hubladebühne der Figur 7, wenn die Plattform zum Plattformpaket zusammengefaltet wird.

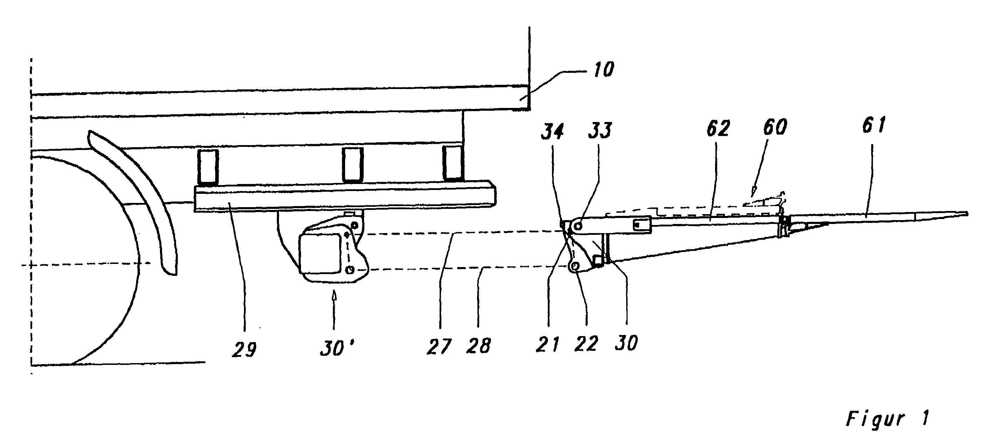

Figur 1 zeigt die gesamthafte Anordnung der unterfahrbaren Hubladebühne in Arbeitsstellung. Wenn das Plattformfaltteil 61 auf das Plattformfestteil 62 umgeklappt ist, entsteht das Plattformpaket 60. Das Führungswerk 29 ist am Fahrgestell des Fahrzeuges befestigt. Hierin verfahrbar ist die gesamte Hubladebühne, bestehend aus Hubwerk und Plattform. Das Hubwerk besteht aus dem Achskörper 30', den Tragarmen der Parallellenker, dargestellt mit der Wirklinie Tragarm 27 und Wirklinie Parallellenker 28. Der Anschlusskopf 30 gehört zum Parallelogramm des Hubwerks, ist aber von der Anwendungsfunktion Bestandteil der Plattform, zu der auch das Plattformfestteil 62 und das Plattformfaltteil 61 gehören. Um die Hubladebühne zu verstauen, wird das Plattformfaltteil 61 auf das Plattformfestteil 62 geklappt. Das so entstandene Plattformpaket 60 wird dann (im ganz ausgefahrenen Zustand) um den Drehpunkt 33 auf den Tragarm 20 geklappt. Nach dem Einfahren verschwindet die gesamte Hubladebühne vollständig unter den Aufbau.

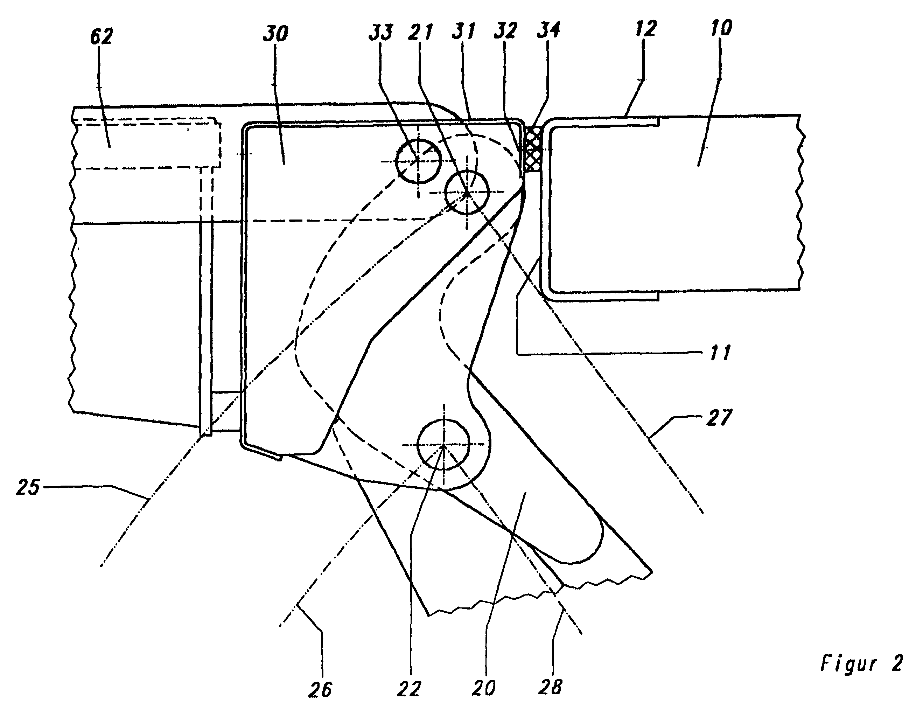

Figur 2 zeigt den Tragarm 20 mit seiner Wirklinie Tragarm 27, seiner Drehachse Tragarm 21, die Drehachse Parallellenker 22 und dessen Wirklinie Parallellenker 28 des parallelogrammförmigen Hubwerks, dessen oberer Teil der Anschlusskopf 30 ist. Der Ladeboden 10 mit seiner Oberkante Ladeboden 12 und seinem Heckschweller 11 bildet das Ende des Aufbaus. Die Plattform mit Anschlusskopf 30 ist auf Ladebodenhöhe bodenbündig angefahren. Hierbei liegen die Oberkante Plattformfläche, Oberkante Anschlusskopf 31 und Oberkante Ladeboden 12 auf einer Ebene. Auf dieser Ebene bewegen sich Roll- und Gabelhubwagen optimal. Am senkrechten Anschlussflansch 32 des Anschlusskopfes 30 ist die Gummianschlagleiste 34 befestigt. Diese dämpft das Anschlaggeräusch beim Anfahren.

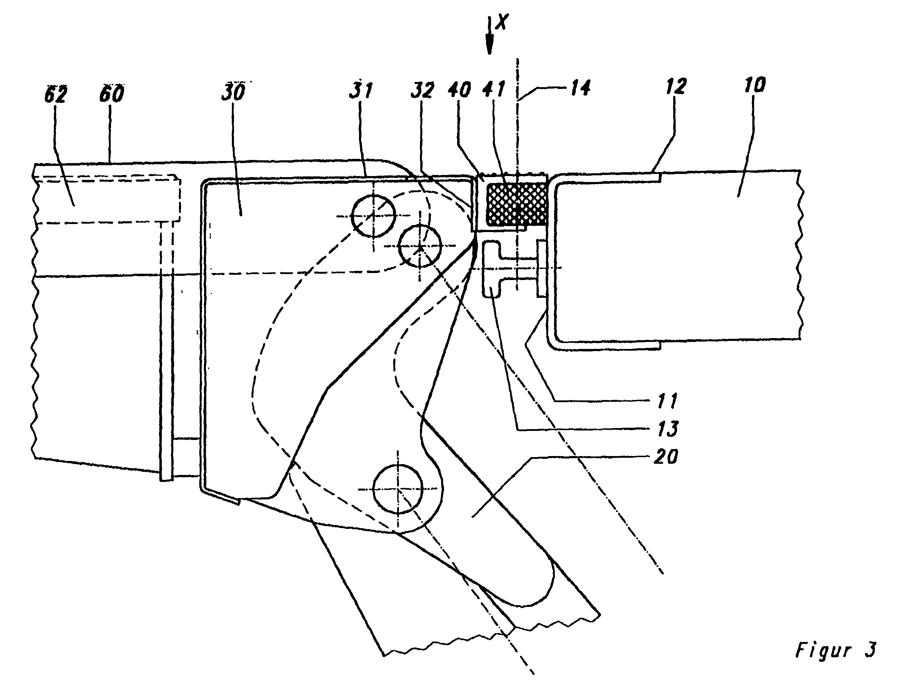

Figur 3 zeigt dieselbe Situation wie Figur 1, jedoch mit der festen Überfahrbrücke 40. Hier bildet der Anschlagpuffer 41 den schalldämpfenden Anschlag. Auf dem Heckschweller 11 ist das Verschlusslager 13 der Drehstangenverschlüsse 14 (Wirklinie) zu erkennen.

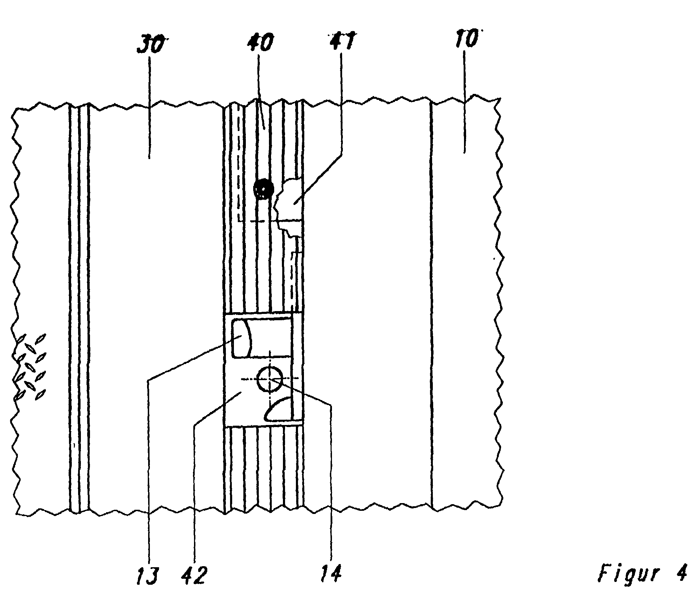

Figur 4 zeigt die Draufsicht der Figur 3 als Ausschnitt Das Profil der festen Überfahrbrücke 40 ist unterbrochen und bildet den Ausschnitt 42. Dies ist notwendig, damit die Plattform beim Absenken an dem Verschlusslager 13 frei geht. Der Drehstangenverschluss, der zum besseren Verständnis mit 14 angedeutet ist, befindet sind in Wahrheit an den Türen, die geöffnet sind.

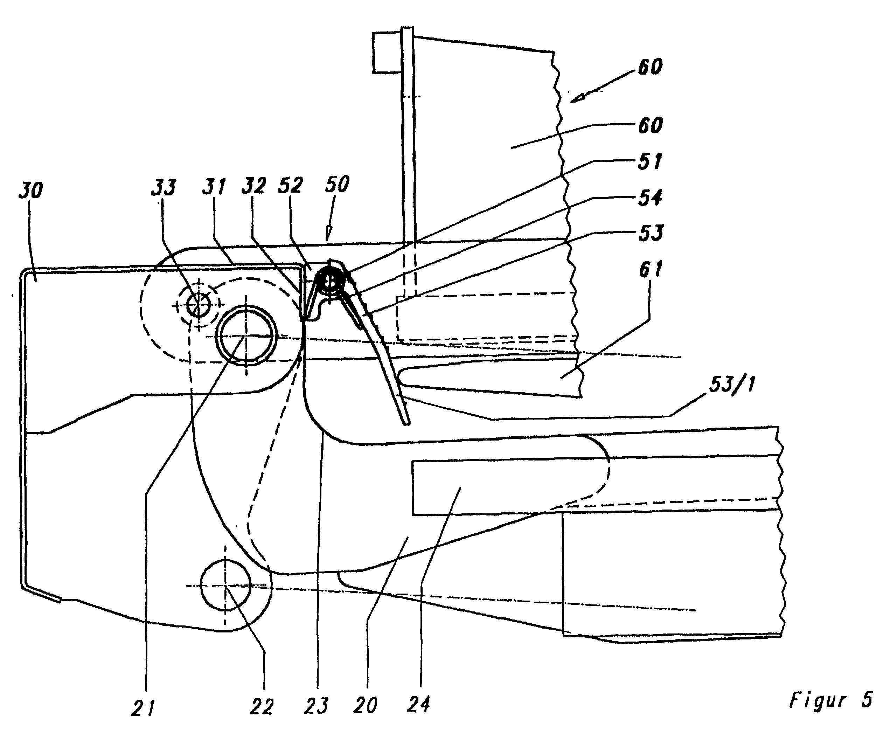

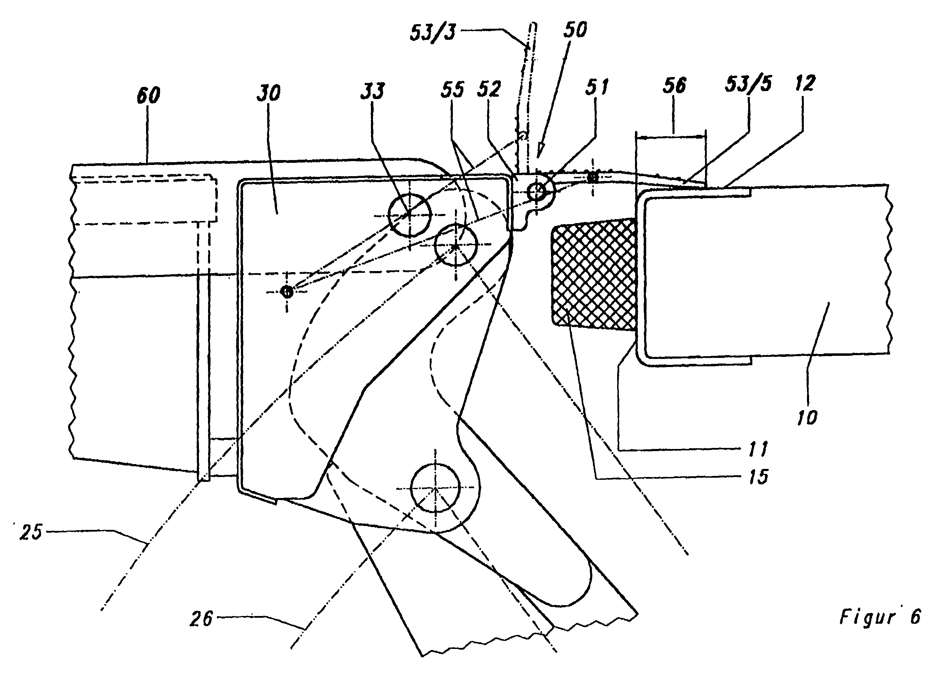

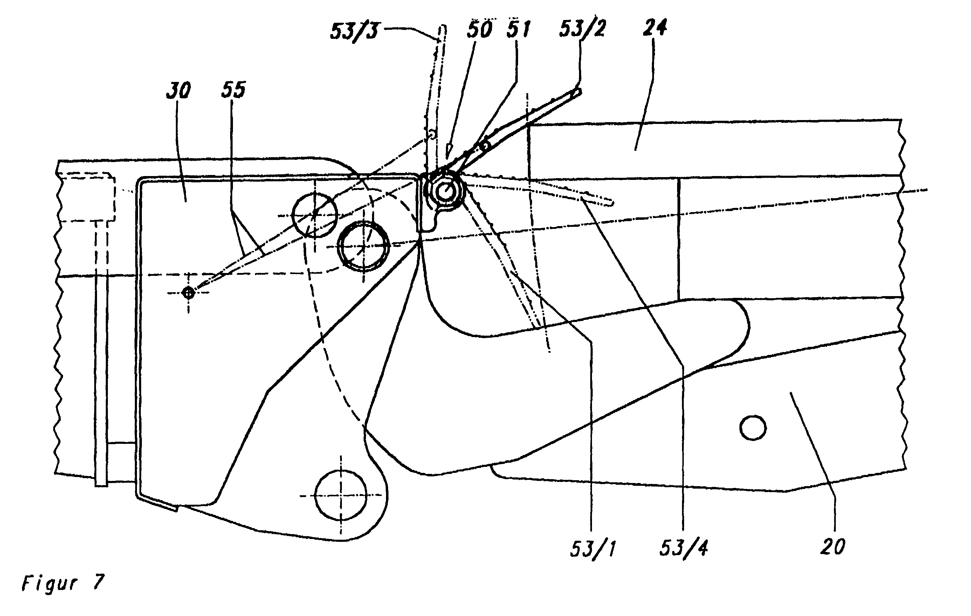

Figur 5 zeigt die bewegliche Überfahrbrücke 50 in verstautem Zustand, d. h. mit eingefaltetem Plattformpaket 62. Die bewegliche Überfahrbrücke 50 besteht aus dem Klappteil 53, dem Flanschscharnierlager 52 mit dem gemeinsamen Drehpunkt 51. Das Klappteil 53 wird durch die Schenkelfeder 54 gegen das Plattformfaltteil 61 gedrückt. Die bewegliche Überfahrbrücke 50 ist durch ihr Flanschscharnierlager 52 mit dem Anschlussflansch 32 des Anschlusskopfes 30 verschraubt. Die Schenkelfeder 54 hat die Aufgabe, das Klappteil 53, wie in Figuren 6 und 7 beschrieben, in etwa in der Waagerechten zu halten, damit es beim Senken von Anschlag 24 zwangsweise aufgestellt wird.

Figur 6 zeigt die Plattform und den Anschlusskopf 30 mit dem beweglich Klappteil 53 in der Position 53/5 in Arbeitsstellung auf Oberkante Ladeboden 12 liegend. Auf dem Heckschweller 11 ist der seitliche oder durchgehende Rammgummi 15 befestigt. Dazwischen bzw. in der Unterbrechung können ein oder mehrere Verschlusslager von Drehstangenverschlüssen für die Türen liegen. Beim Abfahren (Funktion Senken um den Schwenkradius 25/26) wird das Klappteil 53 um den Drehpunkt Überfahrbrücke 51 angehoben. Dadurch bekommt die Zugfeder 55 genügend Hebelwirkung, so dass diese das Klappteil 53 in die senkrechte Position 53/3 verschwenkt. Ist die Überdeckung 56 wesentlich geringer und der Rammgummi 15 weniger ausladend, kann es sein, dass die Zugkraft der Zugfeder 55 bei dem eingetretenen wirksamen Hebelabstand nicht ausreicht, das Klappteil 53 aufzustellen, und dieses bleibt aufgrund der Reibung in den Lagern des Drehpunktes Überfahrbrücke 51 indifferent, leicht nach oben zeigend stehen. Beim Heben und Senken der Plattform muss sich das Klappteil bestimmungsgemäß in der Position 53/3 befinden.

Figur 7 zeigt den vorstehend beschriebenen Fall von Figur 6 mit dem Klappteil 53 Position 53/2 auf dem achskörperbefestigten Klappteil-Anschlag 24. Durch weiteres Senken wird das Klappteil 53 aus der indifferenten Lage mit Unterstützung der Zugfeder 55 in die senkrechte Lage Position 53/3 verschwenkt. Weiter zeigt die Figur 7 die Klappteil-Position 53/4 nach einer Fehlbedienung, d. h . das Klappteil 53 wurde unterhalb des Klappteil-Anschlages 24 in die nahezu waagerechte Position zwischen 53/2 und 53/4 gebracht. Bei weiterem Hochfahren der Plattform (Funktion Heben) wird das Klappteil 53 aus der Position 53/4 zwangsläufig in die Position 53/5 verschwenkt. Nach Passieren des Klappteil-Anschlages 24 wird das Klappteil 53 durch die Schenkelfeder 54 wieder nahezu in die waagerechte Position verschwenkt. Bevor die Plattform-Position nach Figur 6 erreicht werden kann, muss die Bedienperson vorher manuell das Klappteil in die senkrechte Position verschwenken.

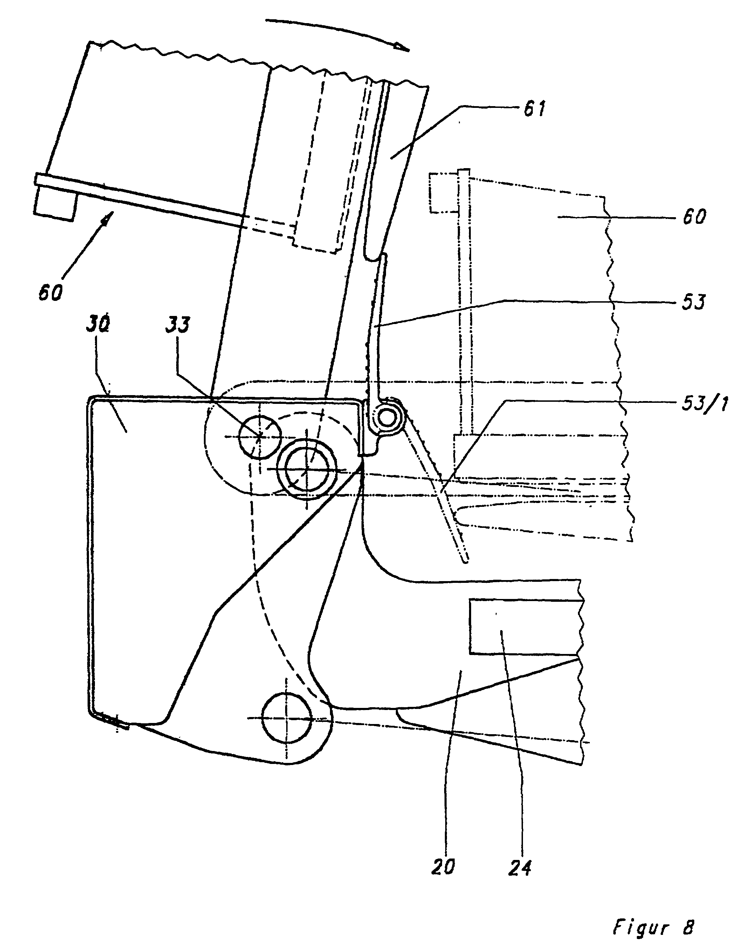

Figur 8 zeigt die Situation beim Einfalten des Plattformpaketes 60. Hierbei trifft das Plattformfaltteil 61 auf die Spitze des Klappteiles 53 und verschwenkt dieses in die Position 53/1 automatisch mit.

Die Erfindung betrifft eine hydraulisch falt- und unterfahrbare Hubladebühne
- mit einem parallelogrammförmigen Hubwerk
- mit einer Plattform, bestehend aus mindestens zwei, vorzugsweise drei Segmenten, die schamierförmig miteinander verbunden sind, wobei das hubwerkseitige Segment (Anschlusskopf) Bestandteil der Parallelogrammführung und nicht aus dem Parallelogramm heraus verschwenkbar ist sowie ein bzw. zwei um je 180° faltbare Plattformsegmente
- mit einem horizontalen Führungswerk
wobei die dem Heckschweller des Aufbaus zugewandte Seite des Anschlusskopfes einen Anschlussflansch aufweist, an dem wahlweise
- mindestens zwei Gummianschlagleisten
- eine feste Überfahrbrücke
- eine bewegliche Überfahrbrücke
   befestigbar sind.

Die feste Überfahrbrücke kann als U- oder L-förmiges Profil so ausgebildet sein, dass bei der Montage der Hubladebühne an das Fahrzeug die notwendigen Aussparungen für die heckseitigen Verschlusslager durch Aus- oder Absägen leicht herstellbar sind.

Das Klappteil der beweglichen Überfahrbrücke befindet sich in der Verstauposition in etwa senkrecht nach unten zeigend zwischen Anschlusskopf, Plattformpaket und Tragarmkontur und ist in der Vertikalen um ca. 180° schwenkbar.

Das Klappteil ist zusätzlich zu der Zugfeder, die dieses in der senkrechten Position hält, durch eine weitere Feder nahe der waagerechten Stellung unterhalb gehalten, nach unten gegen die Feder verschwenkbar und hat nach oben bezüglich der Zug-feder einen Freilauf.

Beim Senken der Plattform vom Ladebodenniveau aus wird das Klappteil durch einen hubwerkseitigen Anschlag in die obere, senkrechte Stellung verschwenkt.

Das in der nahezu senkrechten Arbeitsposition stehende Klappteil wird beim Einfalten des Plattformpaketes automatisch in die Verstauposition verschwenkt

Bei einer Hubladebühne für ein Kraftfahrzeug, mit einem parallelogrammförmigen Hubwerk 27, 28 zum Heben und Senken einer Plattform, die an zwei voneinander querbeabstandeten Anschlussköpfen 30 des Hubwerks 27, 28 schwenkbar gelagert ist, wobei die Plattform um eine an den Anschlussköpfen 30 vorgesehene Achse 33 zu einem Plattformpaket 62 zusammenfaltbar ist, ist an der dem Heck des Kraftfahrzeuges zugewandte Seite der Anschlussköpfe 30, insbesondere über die gesamte Breite der Plattform, ein Anschlussflansch 32 zum Befestigen einer beweglichen oder unbeweglichen Überfahrbrücke 40; 50 oder einer Anschlagleiste 34 aus elastischem Material vorgesehen, wobei bei auf Ladebodenniveau angehobener Plattform die Überfahrbrücke 40; 50 auf dem Ladeboden 12 des Kraftfahrzeuges aufliegt bzw. die Anschlagleiste 34 stimseitig um Ladeboden 12 anliegt.

Die Anschlussköpfe 30 können Bestandteil des Hubwerks 27, 28 oder der Plattform sein. Der Anschlussflansch 32 ist durch das etwa senkrecht nach unten abgewinkelte Ende eines die Oberkante 31 der Anschlussköpfe 30 bildenden Blechs gebildet. Das Blech dient einerseits als Plattform und ummantelt andererseits die beiden Anschlussköpfe.

Die unbewegliche Überfahrbrücke 40 kann als ein zum Heck des Kraftfahrzeuges offenes U-Profil oder als L-förmiges Profil ausgebildet sein. Im U- bzw. L-Profil kann ein elastischer Anschlagpuffer 41 vorgesehen sein, der in Richtung auf das Heck des Kraftfahrzeuges vorsteht. Die Anschlagleiste 34 oder das U- bzw. L-Profil der unbeweglichen Überfahrbrücke 40 ist im Bereich von am Heck des Kraftfahrzeuges vorgesehenen Vorsprüngen 13 ausgespart oder unterbrochen.

Die bewegliche Überfahrbrücke 50 kann als ein am Anschlussflansch 32 schwenkbar gelagertes Klappteil 53 ausgebildet sein, das durch eine erste Feder 54 in eine etwa waagerechte Schwenkposition 53/5 vorgespannt ist. Das Klappteil 53 ist zwischen einer über die Plattform etwa senkrecht hochstehenden Schwenkposition 53/3 und einer etwa senkrecht nach unten stehenden Schwenkposition 53/1 verschwenkbar. An jedem Anschlusskopf 390 ist eine am Klappteil 53 angreifende Zugfeder 55 abgestützt, deren Wirklinie in der etwa waagerechten Schwenkposition des Klappteils 53 durch deren Schwenkachse 51 geht und die das Klappteil 53 oberhalb der etwa waagerechten Schwenkposition 53/5 in die etwa senkrecht hochstehende Schwenkstellung 53/3 kraftbeaufschlagt. Das in seiner nahezu senkrechten Arbeitsposition 53/3 stehende Klappteil 53 ist beim Zusammenfalten der Plattform zunächst gegen die Wirkung der Zugfeder 55 und dann gegen die Wirkung der ersten Feder 54 durch das Plattformpaket 62 etwa senkrecht nach unten in seine Verstauposition 53/1 auslenkbar. Am Hubwerk 27, 28 ist ein Anschlag 24 vorgesehen, an dem das zwischen der etwa waagerechten Schwenkposition 53/5 und der etwa senkrecht nochstehenden Schwenkposition 53/3 befindliche Kappteil 53 beim Absenken der Plattform vom Ladebodenniveau bis in den Wirkbereich der Zugfeder 55 aufgerichtet wird.

## Patentansprüche

1. Hubladebühne für ein Kraftfahrzeug,
mit einem parallelogrammförmigen Hubwerk (27, 28) zum Heben und Senken einer Plattform, die an zwei voneinander querbeabstandeten Anschlußköpfen (30) des Hubwerks (27, 28) schwenkbar gelagert ist, wobei die Plattform um eine an den Anschlußköpfen (30) vorgesehene Achse (33) zu einem Plattformpaket (62) zusammenfaltbar ist,
**dadurch gekennzeichnet,**
**daß** an der dem Heck des Kraftfahrzeugs zugewandten Seite der Anschlußköpfe (30), insbesondere über die gesamte Breite der Plattform, ein Anschlußflansch (32) zum Befestigen einer beweglichen oder unbeweglichen Überfahrbrücke (40; 50) oder einer Anschlagleiste (34) aus elastischem Material vorgesehen ist, wobei bei auf Ladebodenniveau angehobener Plattform die bewegliche Überfahrbrücke (50) auf dem Ladeboden (12) des Kraftfahrzeugs aufliegt bzw. die Anschlagleiste (34) oder die Anschlagplatten (41) der unbeweglichen Überfahrbrücke (40) stirnseitig am Ladeboden (12) anliegen.

2. Hubladebühne nach Anspruch 1, **dadurch gekennzeichnet, daß** die Anschlußköpfe (30) Bestandteil des Hubwerks (27, 28) oder der Plattform sind.

3. Hubladebühne nach Anspruch 1 oder 2, **dadurch gekennzeichnet, daß** der Anschlußflansch (32) durch das etwa senkrecht nach unten abgewinkelte Ende eines die Oberkante (31) der Anschlußköpfe (30) bildenden Blechs gebildet ist.

4. Hubladebühne nach einem der vorhergehenden Ansprüche, **dadurch gekennzeichnet, daß** die unbewegliche Überfahrbrücke (40) als ein zum Heck des Kraftfahrzeugs offenes U-Profil oder als L-förmiges Profil ausgebildet ist.

5. Hubladebühne nach Anspruch 4, **dadurch gekennzeichnet, daß** im U- bzw. am L-Profil ein elastischer Anschlagpuffer (41) vorgesehen ist, der in Richtung auf das Heck des Kraftfahrzeugs vorsteht.

6. Hubladebühne nach einem der Ansprüche 1 bis 3, **dadurch gekennzeichnet, daß** die Anschlagleiste (34) oder das U- bzw. L-Profil der unbeweglichen Überfahrbrücke (40) im Bereich von am Heck des Kraftfahrzeugs vorgesehenen Vorsprüngen (13) ausgespart oder unterbrochen ist.

7. Hubladebühne nach einem der vorhergehenden Ansprüche, **dadurch gekennzeichnet, daß** die bewegliche Überfahrbrücke (50) als ein am Anschlußflansch (32) schwenkbar gelagertes Klappteil (53) ausgebildet ist, das durch eine erste Feder (54) in eine etwa waagerechte Schwenkposition (53/5) vorgespannt ist.

8. Hubladebühne nach Anspruch 7, **dadurch gekennzeichnet, daß** das Klappteil (53) zwischen einer über die Plattform etwa senkrecht hochstehenden Schwenkposition (53/3) und einer etwa senkrecht nach unten stehenden Schwenkposition (53/1) verschwenkbar ist.

9. Hubladebühne nach einem der Ansprüche 6 bis 8, **dadurch gekennzeichnet, daß** an jedem Anschlußkopf (30) eine am Klappteil (53) angreifende Zugfeder (55) abgestützt ist, deren Wirklinie in der etwa waagerechten Schwenkposition des Klappteils (53) durch deren Schwenkachse (51) geht und die das Klappteil (53) oberhalb der etwa waagerechten Schwenkposition (53/5) in die etwa senkrecht hochstehende Schwenkstellung (53/3) kraftbeaufschlagt.

10. Hubladebühne nach Anspruch 9, **dadurch gekennzeichnet, daß** das in seiner nahezu senkrechten Arbeitsposition (53/3) stehende Klappteil (53) beim Zusammenfalten der Plattform zunächst gegen die Wirkung der Zugfeder (55) und dann gegen die Wirkung der ersten Feder (54) durch das Plattformpaket (62) etwa senkrecht nach unten in seine Verstauposition (53/1) auslenkbar ist.

11. Hubladebühne nach Anspruch 9 oder 10, **dadurch gekennzeichnet, daß** am Hubwerk (27, 28) ein Anschlag (24) vorgesehen ist, an dem das zwischen der etwa waagerechten Schwenkposition (53/5) und der etwa senkrecht hochstehenden Schwenkposition (53/3) befindliche Klappteil (53) beim Absenken der Plattform vom Ladebodenniveau bis in den Wirkbereich der Zugfeder (55) aufgerichtet wird.

## Claims

1. A loading tailgate for a motor vehicle, with a parallelogram-shaped lifting mechanism (27, 28) for raising and lowering a platform, which is pivotally mounted on two transversely spaced-apart connection heads (30) of the lifting mechanism (27, 28), the platform being adapted to be folded together about an axis (33) provided on the connection heads (30) and to form a platform package (62), **characterised in that** on the side of the connection heads (30) which is towards the rear of the motor vehicle, particularly over the entire width of the platform, there is a connecting flange (32) for fixing a movable or immovable transfer bridge (40; 50) or an abutment strip (34) of an elastic material, whereby, in the case of a platform which has been raised to loading level, the movable transfer bridge (50) rests on the loading floor (12) of the vehicle, or the abutment strip (34) or the abutment plates (41) on the immovable transfer bridge (40) at the end face of the loading floor (12).

2. A loading tailgate in accordance with Claim 1, **characterised in that** the connection heads (30) are a component part of the lifting mechanism (27, 28) or of the platform.

3. A loading tailgate in accordance with Claim 1 or 2, **characterised in that** the connecting flange (32) is constituted by the substantially vertically downwardly angled-over end of a metal plate forming the upper edge (31) of the connection heads (30).

4. A loading tailgate in accordance with one of the preceding claims, **characterised in that** the immovable transfer bridge (40) is constructed as a channel section or as an L-shaped section which is open towards the rear of the vehicle.

5. A loading tailgate in accordance with Claim 4, **characterised in that** there is in the channel or on the L-shaped section a resilient abutment buffer (41) which projects in the direction of the rear of the motor vehicle.

6. A loading tailgate in accordance with one of Claims 1 to 3, **characterised in that** the abutment strip (34) of the channel or L-shaped section of the immovable transfer bridge (40) is recessed or discontinuous in the region of the projections (13) provided on the rear of the motor vehicle.

7. A loading tailgate in accordance with one of the preceding claims, **characterised in that** the movable transfer bridge (50) is constructed as a hinged part (53) adapted to be pivotable on the connecting flange (32) and is pretensioned by a first spring (54) into a substantially horizontal pivoted position (53/5).

8. A loading tailgate in accordance with Claim 7, **characterised in that** the hinged part (53) is adapted to be pivotable between a substantially upright pivoted position (53/3) above the platform and a substantially vertically downwardly pivoted position (53/1).

9. A loading tailgate in accordance with one of Claims 6 to 8, **characterised in that** biased on each connection head (30) and engaging the hinged part (53) is a draw spring (55), the line of effect of which (in the substantially horizontal pivoted position of the hinged part (53)) passes through its pivot axis (51), said draw spring applying power to the hinged part (53) to move it via the horizontal pivoted position (53/5) into the substantially vertically upright pivoted position (53/3).

10. A loading tailgate in accordance with Claim 9, **characterised in that** when the platform is folding together, the hinged part (53), which is in its almost vertical working position (53/3), can be deflected substantially downwardly firstly against the action of the draw spring (55) and then against the action of the first spring (54) through the platform package (62) and into its stowed position (53/1).

11. A loading tailgate in accordance with one of Claim 9 or 10, **characterised in that** there is on the lifting mechanism (27, 28) an abutment (24) on which the hinged part (53) which is disposed between the approximately horizontal pivoted position (53/5) and the approximately vertically upright pivoted position (53/3) is aligned during lowering of the platform from the loading level and into the range of action of the draw spring (55).

## Revendications

1. Hayon élévateur de chargement pour véhicule automobile, comportant un mécanisme élévateur (27, 28) en forme de parallélogramme pour lever et abaisser une plate-forme qui est montée avec faculté de basculement sur deux têtes de raccordement (30) du mécanisme élévateur (27, 28) situées à distance transversale l'une de l'autre, la plate-forme pouvant être repliée autour d'un axe (33) prévu sur les têtes de raccordement (30) pour former un paquet de plate-forme (62),
**caractérisé en ce que** :
il est prévu, sur le côté des têtes de raccordement (30) tourné vers l'arrière du véhicule automobile, en particulier sur toute la largeur de la plate-forme, une bride de raccordement (32) pour fixer un pont de passage mobile ou immobile (40 ; 50) ou une baguette de butée (34) en matériau élastique, et, lorsque la plate-forme est levée au niveau du plancher de chargement, le pont de passage mobile (50) s'applique sur le plancher de chargement (12) du véhicule automobile ou sur la baguette de butée (34), ou bien les plaques de butée (41) du pont de passage immobile (40) s'appliquent du côté frontal sur le plancher de chargement (12).

2. Hayon élévateur de chargement selon la revendication 1, **caractérisé en ce que** les têtes de raccordement (30) font partie du mécanisme élévateur (27, 28) ou de la plate-forme.

3. Hayon élévateur de chargement selon l'une ou l'autre des revendications 1 et 2, **caractérisé en ce que** la bride de raccordement (32) est formée par l'extrémité coudée approximativement verticalement vers le bas d'une tôle formant l'arête supérieure (31) des têtes de raccordement (30).

4. Hayon élévateur de chargement selon l'une quelconque des revendications précédentes, **caractérisé en ce que** le pont de passage immobile (40) est réalisé sous la forme d'un profil en U ouvert vers l'arrière du véhicule automobile ou sous la forme d'un profil en L.

5. Hayon élévateur de chargement selon la revendication 4, **caractérisé en ce qu'**il est prévu dans le profil en U ou sur le profil en L un tampon de butée élastique (41) qui fait saillie en direction de l'arrière du véhicule automobile.

6. Hayon élévateur de chargement selon l'une quelconque des revendications 1 à 3, **caractérisé en ce que** la baguette de butée (34) ou le profil en U ou en L du pont de passage immobile (40) est échancrée ou interrompue au niveau de saillies (13) prévues à l'arrière du véhicule automobile.

7. Hayon élévateur de chargement selon l'une quelconque des revendications précédentes, **caractérisé en ce que** le pont de passage mobile (50) est réalisé sous la forme d'une partie rabattable (53) montée en basculement sur la bride de raccordement (32) et précontrainte par un premier ressort (54) dans une position de basculement approximativement horizontale (53/5).

8. Hayon élévateur de chargement selon la revendication 7, **caractérisé en ce que** la partie rabattable (53) est susceptible de basculer entre une position de basculement (53/3) redressée approximativement verticalement au-dessus de la plate-forme et une position de basculement (53/1) dirigée approximativement verticalement vers le bas.

9. Hayon élévateur de chargement selon l'une quelconque des revendications 6 à 8, **caractérisé en ce que** sur chaque tête de raccordement (30) s'appuie un ressort de traction (55) qui attaque la partie rabattable (53), dont la ligne d'action dans la position de basculement approximativement horizontale de la partie rabattable (53) passe par son axe de basculement (51), et qui sollicite par une force la partie rabattable (53) au-dessus de la position de basculement approximativement horizontale (53/5) jusque dans la position redressée approximativement verticale (53/3).

10. Hayon élévateur de chargement selon la revendication 9, **caractérisé en ce que** la partie rabattable (53) située dans sa position de travail approximativement verticale (53/3) peut être déviée, lors du pliage de la plate-forme, tout d'abord à l'encontre de l'effet du ressort de traction (55) et ensuite à l'encontre de l'effet du premier ressort (54), par le paquet de plate-forme (62) approximativement verticalement vers le bas jusque dans sa position de rangement (53/1).

11. Hayon élévateur de chargement selon l'une ou l'autre des revendications 9 et 10, **caractérisé en ce que** sur le mécanisme élévateur (27, 28) est prévue une butée (24) sur laquelle la partie rabattable (53) située entre la position de basculement approximativement horizontale (53/5) et la position de basculement redressée approximativement verticale (53/3) est redressée depuis le niveau du plancher de chargement jusque dans la zone d'action du ressort de traction (55) lors de l'abaissement de la plate-forme.
